# FASCICULE DE BREVET EUROPEEN

(11) **EP 2 306 059 B1**
(45) Date de publication et mention de la délivrance du brevet: **11.12.2013**
(21) Numéro de dépôt: 10180570.3
(22) Date de dépôt: 28.09.2010
(51) Int. Cl.: F16L 29/00, F16L 37/36, F16L 37/44

(54) **Elément femelle de raccord rapide et raccord rapide incorporant un tel élément**
Schnellkupplungsmuffe und Schnellkupplung mit solcher Schnellkupplungsmuffe
female connector of a quick coupling and quick coupling comprising such female connector

(30) Priorité: 01.10.2009 FR 0956862
(43) Date de publication de la demande: 06.04.2011
(73) Titulaire: Staubli Faverges, 74210 Faverges (FR)
(72) Inventeur: Tiberghien, Alain-Christophe, 74320 Sevrier (FR); Ravaz, Maurice, 74210 Faverges (FR); Pastore, Olivier, 73400 Ugine (FR)
(74) Mandataire: Myon, Gérard Jean-Pierre

(56) Documents cités:
- EP-A1- 1 437 543
- EP-A2- 1 998 097
- US-A- 5 863 023

## Description

L'invention a trait à un élément femelle de raccord rapide ainsi qu'à un raccord rapide qui peut être utilisé pour la jonction amovible de deux canalisations de fluide sous pression et qui comprend, entre autres, un tel élément femelle.

Dans le domaine de la jonction amovible de canalisations parcourues par un fluide sous pression, il est connu d'utiliser un élément femelle de raccord qui comprend des moyens commandés de verrouillage d'un embout mâle en configuration emmanchée dans l'élément femelle, c'est-à-dire dans une configuration raccordée des canalisations dont les éléments mâle et femelle constituent les extrémités respectives. De tels raccords sont connus par exemple, du document US 5863023. Un élément femelle de raccord comprend généralement une vanne de contrôle de l'écoulement du fluide sous pression. Cette vanne doit pouvoir être manoeuvrée dans le cas de fluide à très haute pression, notamment pour du gaz de pétrole liquéfié (GPL) à introduire dans un réservoir de véhicule automobile à des pressions de l'ordre de 300 bars. Pour ce faire, il est connu d'utiliser une vanne ou soupape comportant deux pistons définissant chacun l'une des deux surfaces opposées au contact du fluide sous pression. Les deux pistons, qui doivent être manoeuvrés simultanément, dans les deux directions d'ouverture et de fermeture sont reliés par une tige qui traverse le conduit de circulation du fluide et réduit donc sa section d'écoulement. Les efforts du fluide sous pression sur les deux pistons mettent en traction la tige dont la section doit être dimensionnée de façon à résister à ces efforts, rendant la tige d'autant plus encombrante.

En outre, notamment si le gaz qui circule dans le raccord est de l'hydrogène, il est connu que son action sur un matériau sollicité en traction a pour effet de diminuer sa durée de vie. Ceci implique donc d'augmenter la section de la tige et de la rendre d'autant plus encombrante.

C'est à ces inconvénients qu'entend plus particulièrement remédier l'invention en proposant un nouvel élément femelle de raccord rapide qui comprend une vanne dont le fonctionnement est fiabilisé.

A cet effet, l'invention concerne un élément femelle de raccord rapide destiné à la jonction amovible de canalisations de fluide sous pression, cet élément femelle étant équipé d'un conduit de circulation de fluide et d'une vanne de contrôle de l'écoulement du fluide dans le conduit, la vanne comprenant un premier piston et un deuxième piston mobiles selon une même direction par rapport à un corps de l'élément femelle, le premier piston étant apte à coopérer directement ou indirectement avec un siège formé par le corps de l'élément femelle pour la fermeture de la vanne, alors que les premier et deuxième pistons sont reliés par des moyens de liaison mécanique et définissent chacun l'une de deux surfaces opposées en contact avec le fluide lorsque la vanne est ouverte. Cet élément femelle est **caractérisé en ce que** les moyens de liaison mécanique entre les premier et deuxième pistons sont disposés à l'extérieur du conduit de circulation du fluide.

Lorsque la vanne est ouverte, les efforts exercés par le fluide sur chacun des deux pistons sont antagonistes, et suivant le dimensionnement des deux surfaces opposées, ces efforts se compensent ou sont déséquilibrés dans le sens de l'ouverture ou dans le sens de la fermeture de la vanne. Le second piston joue un rôle de « piston de compensation ».

Grâce à l'invention, les moyens de liaison entre les premier et deuxième pistons peuvent être dimensionnés sans gêner l'écoulement du fluide dans le conduit de circulation du fluide. Par ailleurs ces moyens de liaison mécaniques ne sont pas soumis à l'action chimique du fluide tel que de l'hydrogène, ce qui permet d'augmenter leur durée de vie.

Selon des aspects avantageux mais non obligatoires de l'invention, un tel élément femelle de raccord peut incorporer une ou plusieurs des caractéristiques suivantes, prises dans toute combinaison techniquement admissible :
- Les moyens de liaison mécanique entre les premier et deuxième pistons comprennent une première plaque cinématiquement liée au premier piston, une deuxième plaque cinématiquement liée au deuxième piston, et au moins un organe de liaison reliant les première et deuxième plaques, alors que les première et deuxième plaques sont disposées de part et d'autre d'une portion du conduit de circulation définie entre les surfaces opposées des pistons et alors que l'organe de liaison est monté mobile par rapport au corps de l'élément femelle, selon une direction parallèle à la direction de déplacement des pistons par rapport à ce corps.
- L'élément femelle de raccord comprend deux organes de liaison entre les première et deuxième plaques, ces deux organes de liaison étant montés coulissants selon la direction de déplacement des deux pistons dans deux logements ménagés dans le corps de l'élément femelle.
- L'un au moins des pistons est partiellement inséré dans un logement correspondant de la plaque à laquelle il est cinématiquement lié et un jeu radial est ménagé entre le piston et ce logement.
- Le premier piston est partiellement inséré dans un logement correspondant de la première plaque et un jeu axial est ménagé entre un piston et ce logement.
- Le premier piston est monté, coulissant et de façon étanche, dans un premier alésage du corps et le deuxième piston est monté, coulissant et de façon étanche, dans un deuxième alésage du corps.
- L'aire de la section transversale du deuxième piston au niveau de son contact étanche avec le deuxième alésage est supérieure à l'aire de la section transversale du premier piston au niveau de son contact étanche avec le premier alésage.
- Le premier piston est monté, coulissant et de façon étanche, dans un alésage du corps et la section transversale du premier piston au niveau de sa zone d'appui sur le siège ou la section transversale d'un organe plaqué par le premier piston sur le siège a une aire supérieure à l'aire de la section transversale du premier piston au niveau de son contact étanche avec l'alésage.
- L'élément femelle de raccord comprend au moins un levier articulé par rapport au corps autour d'un axe perpendiculaire à la direction de coulissement des pistons, ce levier étant cinématiquement lié aux moyens de liaison mécanique, alors qu'une première rotation du levier par rapport à l'axe provoque une translation des moyens de liaison mécanique et des pistons selon leur direction de déplacement dans un premier sens et alors qu'une deuxième rotation du levier par rapport à l'axe, opposée à la première rotation, provoque une translation des moyens de liaison mécanique et des pistons selon leur direction de déplacement dans l'autre sens ;
- L'extrémité du premier piston présente une surface partiellement sphérique apte à venir en appui sur le siège en configuration fermée de la vanne.
- Le premier piston coopère avec le siège par l'intermédiaire d'une bille apte à venir en appui sur le siège et les deux pistons sont aptes à venir en contact avec la bille au niveau leurs deux surfaces opposées.

L'invention concerne également un raccord rapide pour la jonction amovible de canalisations de fluide sous pression, ce raccord comprenant deux éléments, respectivement mâle et femelle, aptes à s'emmancher l'un dans l'autre, **caractérisé en ce que** l'élément femelle est tel que mentionné ci-dessus.

L'invention sera mieux comprise et d'autres avantages de celle-ci apparaîtront plus clairement à la lumière de la description qui va suivre de trois modes de réalisation d'un élément femelle de raccord et d'un raccord conformes à son principe, donnée uniquement à titre d'exemple et faite en référence aux dessins dans lesquels :
- la figure 1 est une vue en perspective d'un raccord conforme à l'invention incorporant un élément femelle conforme à l'invention et un élément mâle engagé dans l'élément femelle sans être verrouillé avec celui-ci ;
- la figure 2 est une vue de dessus du raccord de la figure 1 ;
- la figure 3 est une coupe à plus grande échelle selon la ligne III-III à la figure 2, une partie d'un tuyau et d'un levier d'actionnement de l'élément femelle étant omise pour la clarté du dessin ;
- la figure 4 est une vue à plus grande échelle du détail IV à la figure 3 ;
- la figure 5 est une coupe à plus grande échelle selon la ligne V-V à la figure 3 ;
- la figure 6 est une coupe analogue à la figure 3, alors que l'élément mâle est en cours de verrouillage dans l'élément femelle ;
- la figure 7 est une coupe selon la ligne VII-VII à la figure 2, alors que les éléments du raccord sont dans la configuration de la figure 6 ;
- la figure 8 est une coupe analogue à la figure 7, lors de la prise d'étanchéité de l'élément femelle sur un joint porté par l'élément mâle du raccord ;
- la figure 9 est une vue à plus grande échelle du détail IX à la figure 8 ;
- la figure 10 est une coupe analogue à la figure 7, lors de l'ouverture d'une vanne de contrôle de l'écoulement de fluide à l'intérieur de l'élément femelle ;
- la figure 11 est une vue à plus grande échelle du détail XI à la figure 10 ;
- la figure 12 est une coupe selon le plan XII-XII à la figure 2 lorsque les éléments du raccord sont dans la configuration des figures 10 et 11 ;
- la figure 13 est une coupe à plus grande échelle selon la ligne XIII-XIII à la figure 10 ;
- la figure 14 est une coupe analogue à la figure 7 lors de la fermeture de la vanne de l'élément femelle et de la purge d'un fluide présent au sein du raccord ;
- la figure 15 est une vue à plus grande échelle du détail XV à la figure 14 ;
- la figure 16 est une vue analogue à la figure 11 pour un raccord conforme à un deuxième mode de réalisation de l'invention ;
- la figure 17 est une vue analogue à la figure 15 pour le raccord de la figure 16 ; et
- la figure 18 est une section comparable à la figure 5 pour un raccord conforme à un troisième mode de réalisation de l'invention.

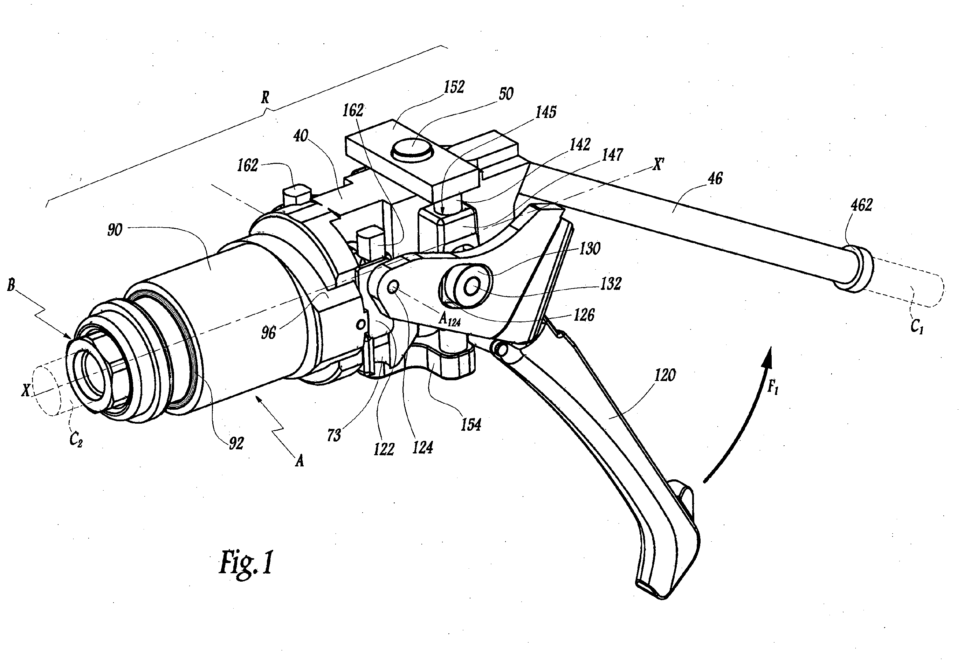

Le raccord rapide R représenté sur les figures 1 à 14 comprend un élément femelle A et un élément ou embout mâle B prévus pour s'emmancher l'un dans l'autre dans la direction d'un axe X-X' qui est, en pratique, un axe longitudinal commun aux éléments A et B.

Par convention, on considère que la partie avant d'un élément A ou B est la partie de cet élément tournée vers l'autre élément lors de leur connexion.

La partie arrière de l'élément femelle A est raccordée fluidiquement à une première canalisation C₁, elle-même raccordée à une source de fluide sous pression non représentée, par exemple une source de gaz tel que du GPL ou de l'hydrogène à une pression de l'ordre de 300 bars. La partie arrière de l'élément mâle B est raccordée à une deuxième canalisation C₂, elle-même raccordée à un organe d'utilisation ou de stockage du fluide provenant de la source précitée. A titre d'exemple, la canalisation C₂ peut être raccordée à un réservoir embarqué sur un véhicule automobile.

L'élément mâle B comprend un corps tubulaire 11 sur lequel est raccordée la canalisation C₂ et qui définit un canal 12 de circulation de fluide sous pression. Un clapet anti-retour 13 est monté dans le corps 11 et vient en appui contre un siège formé par un joint 14 logé dans une gorge périphérique interne 15 du corps 11, ceci sous l'effet d'un ressort non représenté.

Sur sa surface périphérique externe 16 le corps 11 est pourvu d'une gorge périphérique 17 de révolution dont le profil est défini par un fond 17a, qui est plat, et par deux bords 17b et 17c qui divergent en s'éloignant du fond 17a. Ainsi, le fond 17a est cylindrique à base circulaire, alors que les bords 17b et 17c sont tronconiques.

Le corps 11 est également pourvu, sur sa surface radiale interne 18, d'une gorge périphérique 19 de révolution, dans laquelle est reçu un joint torique 20 en élastomère.

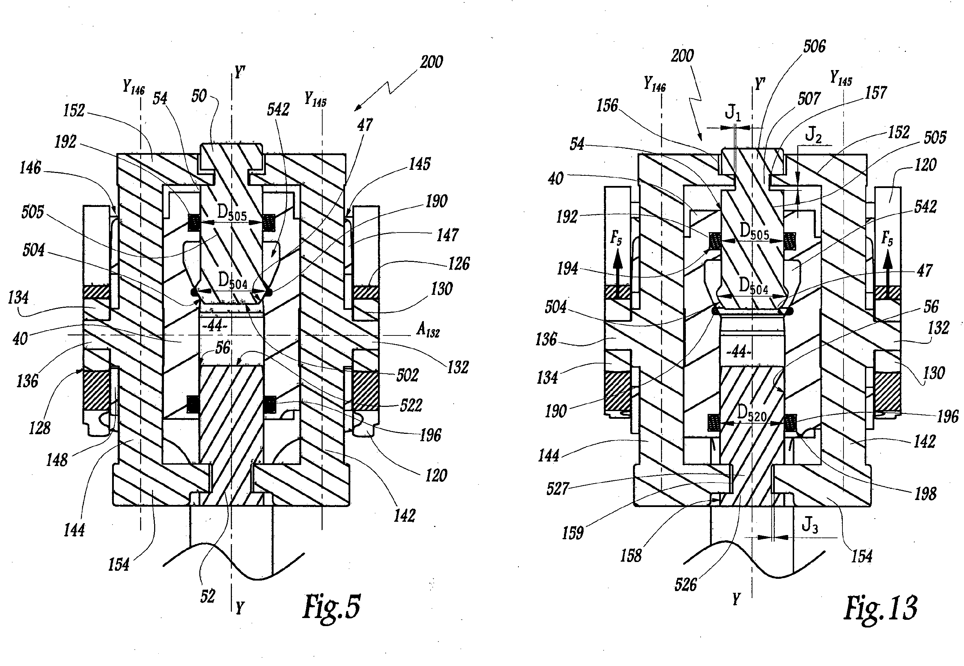

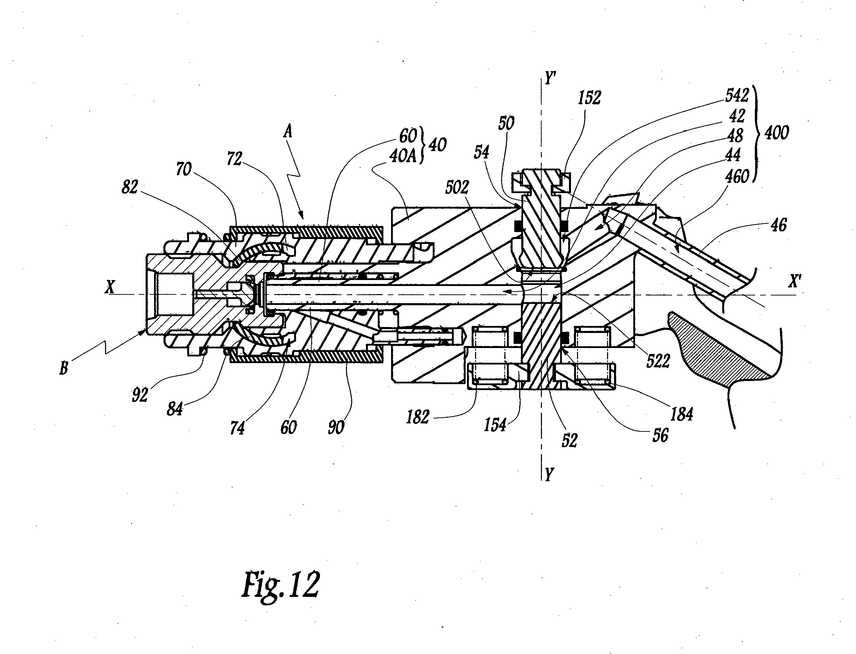

L'élément femelle A comprend un corps principal 40 qui est plus particulièrement visible à la figure 12 et dans lequel sont reçus un premier piston 50 et un deuxième piston 52, visibles aux figures 5, 12 et 13, ces pistons étant respectivement montés dans un premier alésage 54 et dans un deuxième alésage 56 alignés l'un avec l'autre et ayant un axe central commun Y-Y' perpendiculaire à l'axe X-X'. Le corps principal 40 forme un canal 42 de circulation de fluide sous pression à partir d'une chambre 44 définie entre des surfaces en regard 502 et 522 des pistons 50 et 52. Les surfaces 502 et 522 constituent deux surfaces opposées perpendiculaires à l'axe Y-Y' au contact du fluide transitant dans l'élément de raccord A quand la vanne 200 est ouverte.

Le corps principal 40 se prolonge par un tuyau 46 qui se termine par une bride 462 sur laquelle est raccordée la canalisation C₁. Un canal 48 relie le volume intérieur 460 du tuyau 46 à un espace annulaire 542 autour du piston 50.

Ainsi, le volume intérieur 460 du tuyau 46, le canal 48, l'espace 542, la chambre 44 et le canal 42 définissent ensemble un conduit 400 de circulation de fluide sous pression à l'intérieur de l'élément femelle de raccord A à partir de la canalisation C₁. La circulation du fluide sous pression dans le conduit 400 est commandée par une vanne 200 dont les pistons 50 et 52 constituent des éléments mobiles.

Le canal 42 s'étend à la fois au sein d'une partie massive 40A du corps principal 40 et à l'intérieur d'un manchon interne 60 qui prolonge selon X-X' la partie 40A vers l'avant de l'élément A. Le manchon interne 60 est cylindrique, à section circulaire et creux. Le manchon interne 60 est représenté sur les figures comme étant monobloc avec la partie 40A du corps 40. En variante, le manchon interne 60 peut être rapporté sur ce corps, notamment par vissage ou soudage.

Le fait que le manchon interne 60 est ménagé dans le corps principal 40 permet de minimiser la perturbation de la circulation du fluide et de limiter le nombre de pièces en contact avec le fluide, ce qui constitue un avantage notamment dans le cas où le fluide est de l'hydrogène.

Un corps auxiliaire 70 est monté sur le corps principal 40 avec possibilité de déplacement axial vis-à-vis de ce corps principal, parallèlement à l'axe X-X'. Le corps auxiliaire 70 est soumis à l'action d'un ressort 789 qui tend à le repousser selon l'axe X-X' vers l'avant de l'élément femelle A.

Le corps auxiliaire 70 définit deux logements 72 et 74 dans lesquels sont reçus deux organes de verrouillage 82 et 84. Ces organes de verrouillage sont mobiles entre une première position où ils sont complètement engagés dans les logements 72 et 74, de sorte qu'ils ne font pas saillie radialement à partir du corps auxiliaire 70 et en direction de l'axe X-X', et une deuxième position où ces organes de verrouillage 82 et 84 dépassent des logements 72 et 74 en direction de l'axe X-X', au point qu'ils peuvent être partiellement engagés dans la gorge 17 du corps 11 et retenir ainsi l'élément mâle B en position verrouillée dans le corps auxiliaire 70. Les organes de verrouillage 82 et 84 ont des surfaces opposées en forme de tronçon de sphère, alors que les logements 72 et 74 sont également en tronçon de sphère, ce qui confère une bonne compacité radiale au corps auxiliaire 70.

Selon des variantes non représentées de l'invention, les organes de verrouillage peuvent être des pions disposés dans des logements inclinés par rapport à l'axe X-X', comme envisagé dans EP-1 531 297, ou des billes, comme envisagé dans EP-A-1561991. La présente invention est applicable indépendamment du type exact des organes de verrouillage utilisés.

Une bague de commande 90 est montée, avec possibilité de coulissement, selon l'axe X-X' autour du corps auxiliaire 70 dont la surface radiale externe est à section circulaire. La bague 90 est soumise à l'action d'un ressort 92 qui tend à la repousser en direction de la partie massive 40A du corps principal 40.

Des moyens de liaison mécanique non représentés relient la bague 90 aux organes de verrouillage 82 et 84, de sorte que le coulissement de la bague 90 autour du corps auxiliaire 70 permet de contrôler la position des organes de verrouillage 82 et 84 le long de l'axe X-X' et par rapport à leurs logements respectifs 72 et 74. Ainsi, il est possible de verrouiller l'élément mâle B dans l'élément femelle en déplaçant la bague 90 par rapport au corps auxiliaire 70 vers l'avant de l'élément A, c'est-à-dire dans une direction telle que les organes de verrouillage 82 et 84 sont amenés de leur première position à leur deuxième position mentionnées ci-dessus.

Le corps auxiliaire 70 entoure le manchon interne 60 et définit un volume 76 de réception du bord avant 111 du corps 11 de l'élément mâle.

Le corps auxiliaire 70 forme un manchon externe 78 creux, cylindrique, coaxial au manchon interne 60 qui s'étend radialement entre le logement 76 et le manchon interne 60 et sur lequel s'exerce l'effort du ressort 789. On note 62 l'extrémité du manchon interne 60 qui est opposé à la partie 40A du corps principal 40 et qui est entourée par le manchon externe 78, dans la position des figures 1 à 7.

Les parties 60 et 78 de l'élément A constituent ensemble un embout creux 80 à l'intérieur duquel est délimitée une partie du conduit 400 de circulation de fluide et qui peut venir en appui contre le joint torique 20, comme cela ressort des explications qui suivent.

Dans une configuration désaccouplée de l'élément femelle de raccord A, le manchon externe 78 entoure l'extrémité 62 au point que leurs bords avant respectifs sont sensiblement alignés selon une direction perpendiculaire à l'axe X-X'.

Un conduit d'échappement 100 est ménagé transversalement dans le corps auxiliaire 70 et se prolonge jusqu'au niveau de la surface radiale externe 64 du manchon interne 60.

Le conduit d'échappement 100 communique avec le conduit de circulation du fluide 400, à travers un espace annulaire 300 défini entre, d'une part, la surface radiale externe 64 du manchon interne 60 et, d'autre part, la surface radiale interne 79 du manchon externe 78. L'espace annulaire 300 communique fluidiquement avec le circuit d'échappement 100 quelle que soit la position relative des manchons interne 60 et externe 78 au cours du fonctionnement du raccord R. En outre, l'espace annulaire 300 débouche axialement et sur l'avant des manchons 60 et 78 dans un volume circulaire autour de l'axe X-X', ce volume étant en communication avec le canal 42 du conduit de circulation de fluide 400. Le fait que l'épaisseur radiale e₃₀₀ de l'espace annulaire 300 est très faible, de l'ordre de 0,025 mm, conjugué au fait que les manchons interne 60 et externe 78 sont coaxiaux confère une bonne compacité radiale à l'élément femelle A.

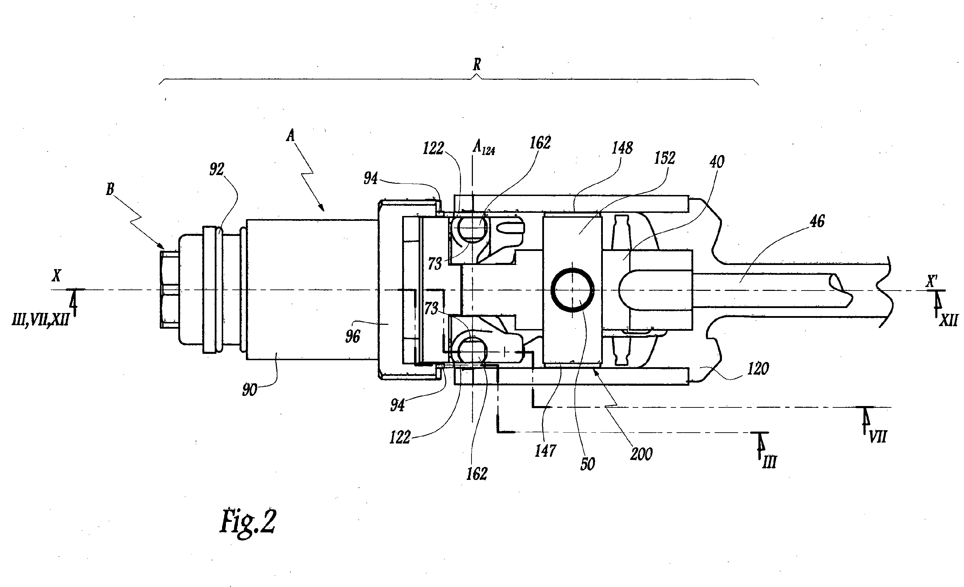

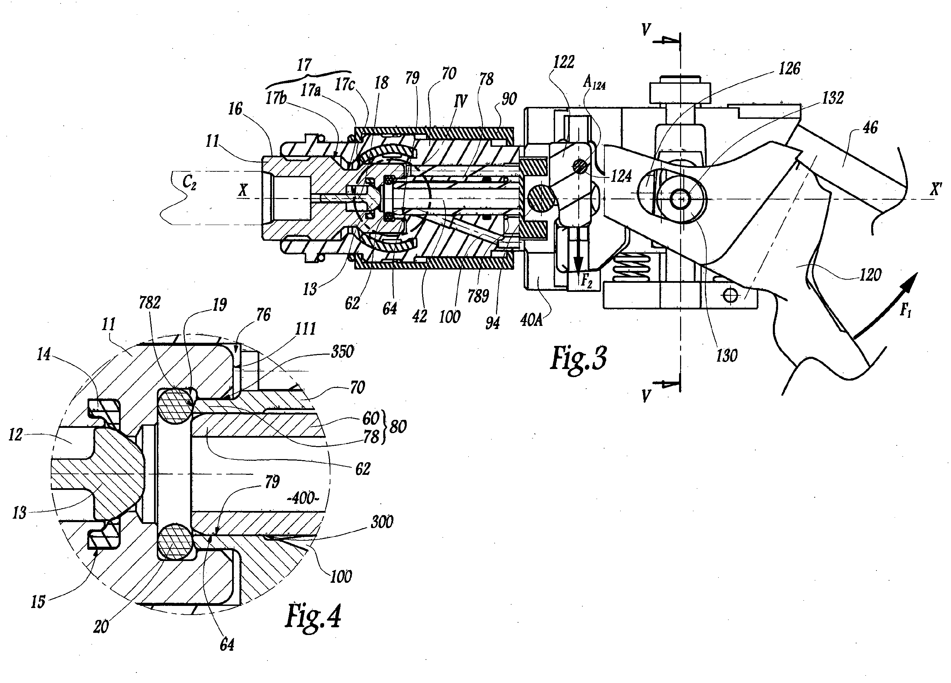

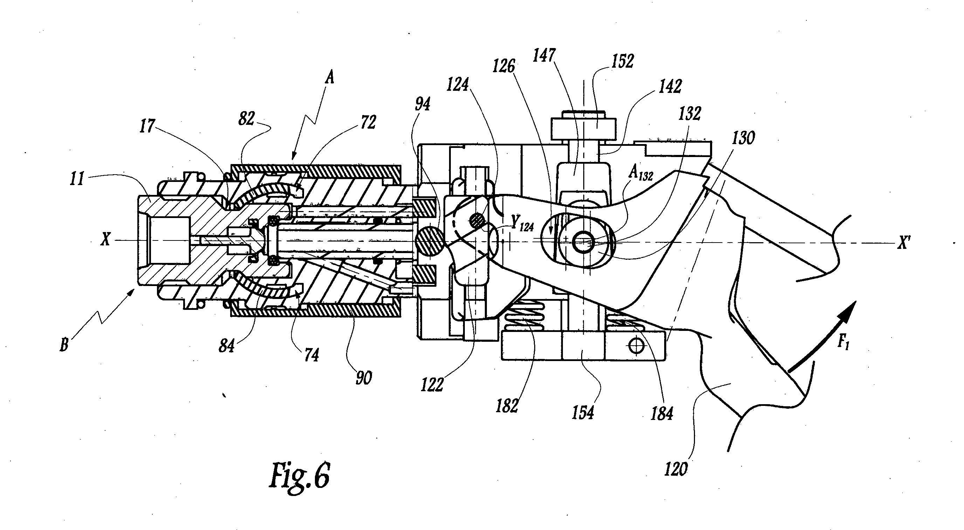

Un levier 120 est articulé sur une came 122 grâce à un pion 124 dont on note A₁₂₄ l'axe longitudinal. En pratique, deux cames 122 sont montées de part et d'autre du corps 40 comme visible à la figure 2 et le levier 120 est articulé sur ces deux cames, autour d'un axe A₁₂₄ commun. Sur la figure 3, la partie du levier 120 articulée sur la came 122 n'est pas représentée, compte-tenu du plan de coupe. La trace de cette partie d'articulation est visible en traits mixtes à la figure 6.

Le levier 120 est pourvu d'une première lumière 126 dans laquelle est engagé un galet 130 monté rotatif autour d'un pion 132. Le levier 120 est également pourvu d'une deuxième lumière 128 qui est masquée à la figure 1 et dans laquelle est engagé un galet 134 monté pivotant autour d'un pion 136.

Les pions 132 et 136 sont solidaires respectivement d'une première colonne 142 et d'une deuxième colonne 144 qui s'étendent entre une première plaque 152 et une deuxième plaque 154 sur lesquelles sont respectivement montés les pistons 50 et 52. Les colonnes 142 et 144 constituent les organes de liaison mécanique entre les plaques 152 et 154 et sont également les moyens communs aux pistons 50 et 52 sur lesquels agissent les galets 130 et 134 pour la commande du mouvement des pistons 50 et 52 dans les sens d'ouverture et fermeture de la vanne 200. Les colonnes 142 et 144 sont montées coulissantes dans deux alésages 145 et 146 ménagés dans des parties externes 147 et 148 du corps principal 40. Les alésages 145 et 146 sont centrés sur des axes Y₁₄₅ et Y₁₄₆ parallèles à l'axe Y-Y'. Les axes Y₁₄₅ et Y₁₄₆ se situent de part et d'autre du plan formé par les axes X-X' et Y-Y'.

Aux figures 5 et 13, les éléments 132, 136, 142, 144, 152 et 154 sont représentés comme formés par une pièce monobloc. En pratique, ils peuvent être constitués de plusieurs éléments assemblés par tout moyen approprié, notamment par soudage ou vissage.

Compte tenu de son mode de montage sur le corps principal 40, le levier 120 est susceptible de pivoter séquentiellement autour des galets 130 et 134 puis autour de l'axe A₁₂₄ et inversement.

Chaque came 122 est en appui contre un galet 94 solidaire de la bague de commande 90 à travers une chape 96.

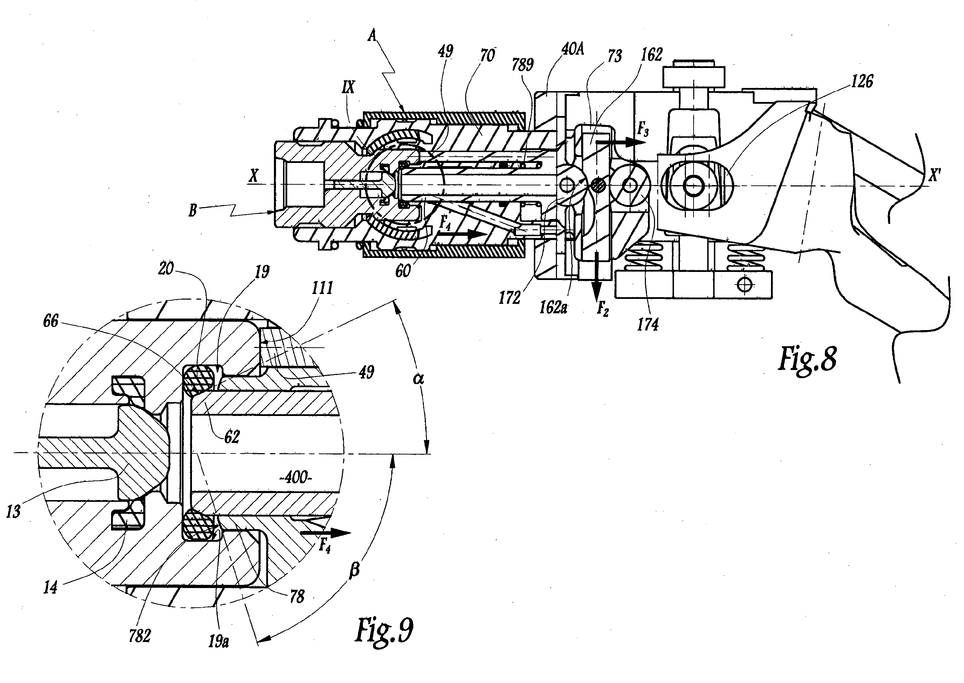

Chaque came 122 est rendue solidaire, par son pion 124, avec une deuxième came 162 qui coulisse dans un logement 73 formé dans le corps auxiliaire 70. La direction de coulissement D₁₆₂ d'une came 162 dans son logement 73 est imposée par la géométrie du corps auxiliaire 70. Cette direction de coulissement est parallèle à l'axe Y-Y'. Comme visible sur la figure 8 par exemple pour la came 162 représentée à la figure 1, chaque came 162 est disposée entre deux galets 172 et 174. Chaque galet 172 est monté tournant autour d'un pion 43 solidaire du corps principal 40 et chaque galet 174 est monté tournant autour d'un pion 45 solidaire du corps auxiliaire 70.

Le fonctionnement est le suivant : En partant d'une configuration où les éléments femelle A et mâle B sont écartés l'un de l'autre, on emmanche l'élément mâle B dans l'élément femelle A en lui faisant subir une translation selon l'axe X-X' telle que le joint 20 vient en butée contre le bord avant du manchon externe 78. On est alors dans la configuration des figures 1 à 5. Le contact entre l'embout creux 80 et l'élément mâle B dans cette configuration présente l'avantage de conférer une bonne compacité axiale au raccord R. Dans cette configuration, où les éléments femelle A et mâle B sont emmanchés et non verrouillés, deux ressorts 182 et 184 disposés entre la plaque 154 et le corps principal 40 ainsi que la pression du fluide dans l'espace annulaire 542 exercent sur l'ensemble formé des pièces 50, 142, 144, 152 et 154 un effort qui plaque le piston 50 contre un siège correspondant 47 formé par le corps principal 40 et ferme la vanne 200.

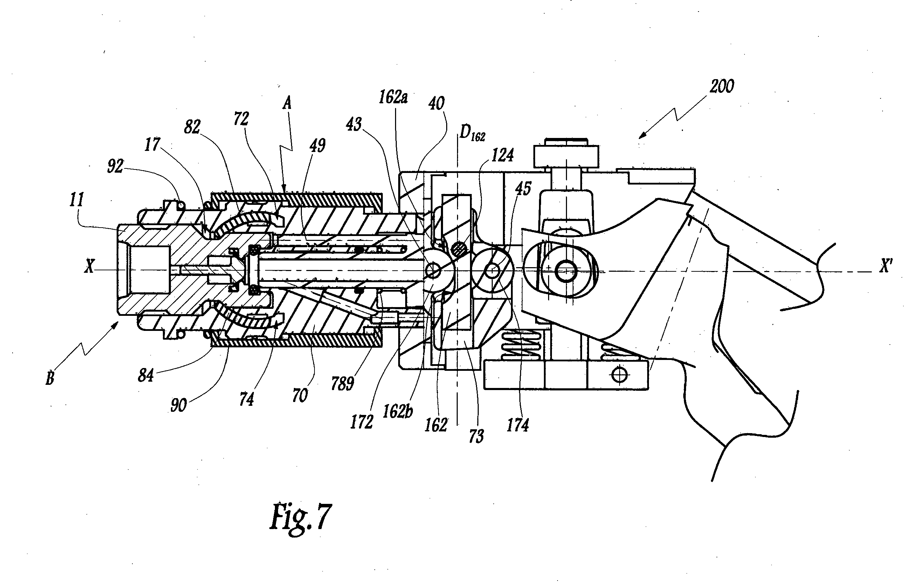

A partir de cette configuration, l'opérateur actionne le levier 120 en exerçant sur celui-ci un effort qui tend à le faire pivoter en direction du tuyau 46, comme représenté par la flèche F₁. Le levier 120 pivote alors autour des galets 130 et 134, ce qui a pour effet de déplacer les cames 122 dans le sens de la flèche F₂ à la figure 3, la direction de ce déplacement étant imposée par le guidage des cames 162 dans leurs logements 73. Le levier 120 pivote autour des galets 130 et 134 en étant guidé par leurs surfaces externes car les efforts à vaincre pour déplacer le corps auxiliaire 70 et la bague de commande 90, parallèlement à l'axe X-X', par rapport au corps principal 40, sont inférieurs aux efforts à vaincre pour déplacer les galets 130 et 134 et les pistons 50 et 52 parallèlement à l'axe Y-Y'. Compte tenu du fait que l'effort élastique exercé par le ressort 92 sur la bague de commande 90 est inférieur à l'effort élastique exercé par le ressort 789 sur le corps auxiliaire 70, et de la géométrie des cames 122, le déplacement de ces cames dans le sens de la flèche F₂ a pour effet de repousser les galets 94 vers l'avant de l'élément mâle A. Ce déplacement des galets 94 a pour effet de déplacer la bague de commande 90 selon l'axe X-X' à l'encontre de l'effort élastique exercé par le ressort 92, ce qui, compte tenu des moyens de liaison cinématique entre la bague 90 et les organes de verrouillage 82 et 84, fait sortir les organes de verrouillage 82 et 84 de leurs logements respectifs 72 et 74, au point que ceux-ci s'engagent dans la gorge 17, comme représenté aux figures 6 et 7. Les organes de verrouillage passent ainsi de leur première position à leur deuxième position. Le corps 11 de l'élément mâle B est ainsi verrouillé dans le corps auxiliaire 70 de l'élément femelle A.

Au cours du déplacement de la bague de commande 90, la came 162 et le corps auxiliaire 70 ne se déplacent pas le long de l'axe X-X' par rapport au corps principal 40. En effet, la came 162 coopère avec le galet 172 au niveau d'une portion 162b de la surface étagée 162a de la came 162 qui est perpendiculaire à l'axe X-X'. Ainsi, les extrémités avant du manchon interne 60 et du manchon externe 78 restent alignées selon une direction perpendiculaire à l'axe X-X'.

En poursuivant le mouvement de pivotement du levier 120 autour des galets 130 et 134 l'utilisateur continue à déplacer les cames 122 et 162 dans le sens de la flèche F₂, ce qui a pour effet de déplacer les cames 162 vers l'arrière de l'élément femelle A par rapport au corps principal 40 à l'encontre du ressort 789. En effet, chaque came 162 est en appui contre un galet 172 ou équivalent solidaire du corps principal 40 à travers le pion 43. En se déplaçant vers le bas à la figure 7, la came 162 est repoussée vers l'arrière du corps principal 40 car une surface de la surface de came étagée 162a, décalée vers l'avant selon l'axe X-X' par rapport à la portion 162b vient en appui contre la surface radiale externe du galet 172.

Comme chaque came 162 est engagée dans un logement 73 du corps auxiliaire 70, ce mouvement de la came 162 vers l'arrière selon l'axe X-X', dans le sens de la flèche F₃ à la figure 8, induit un mouvement correspondant représenté par la flèche F₄ pour le corps auxiliaire 70. Ce mouvement selon F₄ a pour effet d'amener le corps 11 prisonnier du corps auxiliaire 70 en appui contre l'extrémité d'un pion 49 formé par le corps principal 40 et qui s'étend parallèlement au manchon interne 60, à distance de celui-ci. Ce mouvement fait également déplacer selon l'axe X-X' le manchon 78 par rapport au manchon interne 60 vers l'arrière de l'élément femelle A. Les bords avant des manchons interne 60 et externe 78 ne sont donc plus alignés.

Pendant le déplacement selon la flèche F₄ du corps auxiliaire 70 par coopération entre la came 162 et le galet 172, la bague de commande 90 solidaire selon l'axe X-X' de la came 162 effectue le même déplacement que le corps auxiliaire 70.

Dans le référentiel de l'élément mâle B, qui est celui du corps 11 et du joint 20, le mouvement précité du corps auxiliaire 70 par rapport au corps principal 40 a pour effet de faire progresser l'extrémité 62 du manchon interne 60 en direction du joint 14 et d'amener la surface externe du manchon interne 60 en contact avec le joint 20. Comme il ressort de la figure 9, ce mouvement a pour effet de plaquer fermement le joint torique 20 contre le fond 19a de la gorge 19.

L'extrémité 62 est chanfreinée sur l'extérieur. Elle est définie par une surface tronconique 66 convergente vers l'avant de l'élément femelle A et dont le demi-angle au sommet α a une valeur comprise entre 10° et 40°. De façon préférentielle, la valeur de l'angle α est de l'ordre de 25°. Cette géométrie de l'extrémité 62 lui permet d'interagir avec le joint 20 sans « marquer » ou user ce joint de façon excessive lors des manoeuvres successives du raccord R.

Par ailleurs, l'extrémité avant du manchon externe 78 est chanfreinée sur l'extérieur et délimitée par une surface 782 qui est tronconique convergente vers l'avant et dont le demi-angle au sommet β est compris entre 60 et 80°, de préférence de l'ordre de 72°. Ce chanfrein crée un effet coin qui retient le joint 20 dans la gorge 19 malgré le frottement exercé par la surface externe du manchon interne 60 en mouvement relatif par rapport au manchon externe 78 pour la purge.

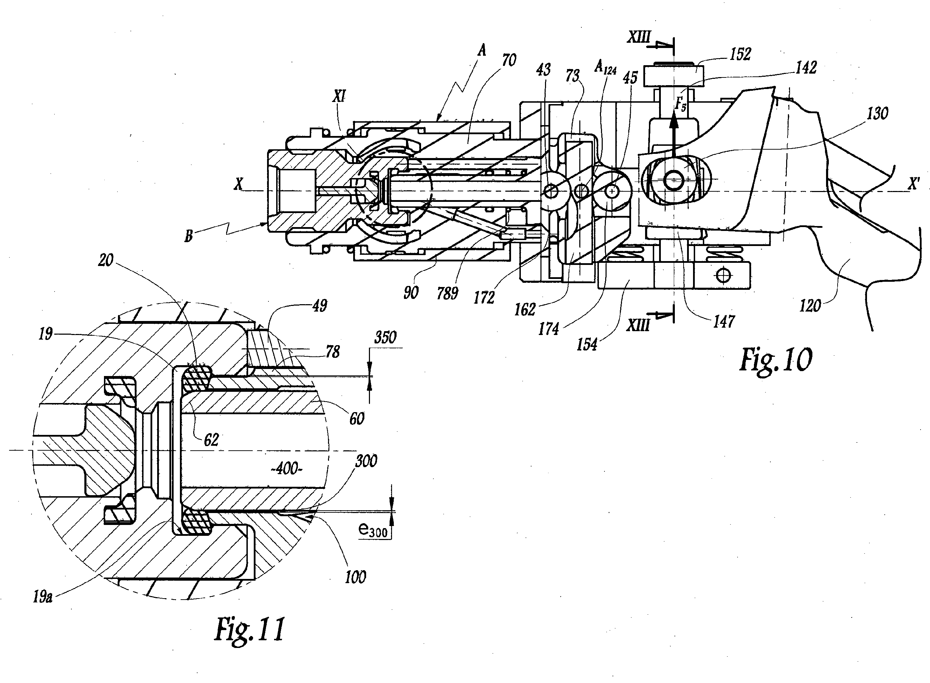

A partir de la configuration des figures 8 et 9, lorsque l'utilisateur poursuit le mouvement de pivotement du levier 120, dans le sens de la flèche F₁, ce levier pivote non plus autour des galets 130 et 134 mais autour de l'axe A₁₂₄. En effet, à ce stade, le corps 11 solidaire en translation du corps auxiliaire 70 est en butée contre le pion 49 du corps principal 40, ce qui rend impossible le mouvement de la came 162 selon la flèche F₂ car il faudrait que le galet 172 coopère avec une surface de la came 162 décalée vers l'avant selon l'axe X-X'. La cinématique décrite permet donc de conditionner l'ouverture de la vanne 200 à la présence d'un élément mâle B verrouillé dans l'élément femelle A. La came 162 a alors atteint une position de fin de course dans laquelle le pion 124 est immobilisé. Ainsi, la poursuite du déplacement du levier 120 dans le sens de la flèche F₁ a pour effet de transmettre aux galets 130 et 134 un effort représenté par les flèches F₅ aux figures 10 et 13. Cet effort déplace l'équipage constitué des pièces 50, 52, 142, 144, 152 et 154 à l'encontre de l'effort exercé par les ressorts 182 et 184 et par la pression du fluide dans l'espace annulaire 542. Cet équipage constitue la partie mobile de la vanne 200 formée dans l'élément femelle A, tandis que le corps principal 40 constitue la partie fixe de la vanne 200 et porte le siège 47.

La géométrie des lumières 126 et 128, rend ces lumières compatibles avec le pivotement du levier 120 autour de l'axe A₁₂₄, alors que l'axe A₁₃₂ garde une même position le long de l'axe X-X' au cours du déplacement de l'équipage mobile de la vanne 200.

Les pièces 142, 144, 152 et 154 constituent des moyens de liaison mécanique entre le piston amont 50 et le piston aval 52, ces moyens de liaison étant disposés à l'extérieur du conduit 400 de circulation de fluide dans l'élément femelle A. Ceci implique que ces moyens de liaison mécanique ne sont pas soumis à l'action chimique du fluide transitant à travers le raccord R et ne gênent pas la circulation du fluide.

Un joint torique 190 est monté dans le corps principal 40 au niveau du siège 47 sur lequel peut venir en appui une surface en tronçon de sphère 504 du piston 50. Le piston 50 est monobloc et il comprend une partie intermédiaire 505 qui est cylindrique à section circulaire et qui est engagée à jeu réduit dans l'alésage 54 qui est également cylindrique et à section circulaire. Un joint torique 192 est disposé dans une gorge 194 ménagée sur la surface radiale de l'alésage 54 et réalise l'étanchéité entre l'espace annulaire 542 et l'extérieur du corps 40. La section d'étanchéité entre le piston 50 et le corps principal 40 au niveau du joint 192 correspond à un disque de diamètre égal au diamètre D₅₀₅ de la partie 505.

On note par ailleurs D₅₀₄ le diamètre de la section d'étanchéité entre le piston 50 et le corps principal 40 au niveau du joint 190 en configuration fermée de la vanne. Le diamètre D₅₀₄ est supérieur au diamètre D₅₀₅, ce qui induit qu'en configuration fermée de la vanne 200, c'est-à-dire lorsque le piston 50 est en appui sur le siège 47, l'effort exercé par le fluide sur le piston 50 dans le sens de la fermeture de la vanne, proportionnel au diamètre D₅₀₄, est supérieur à l'effort du fluide sur le piston 50 dans le sens de l'ouverture, proportionnel au diamètre D₅₀₅, et la résultante des efforts de pression subis par le piston 50 tend à plaquer ce piston contre son siège.

Les ressorts 182 et 184 assurent la fermeture en cas de pression insuffisante en amont du siège 47. La différence entre les diamètres D₅₀₅ et D₅₀₄, de l'ordre de 10%, reste faible, ce qui induit un faible effort d'ouverture de la vanne malgré la pression élevée.

Dans l'exemple représenté sur les figures, le piston 50 est cylindrique à section circulaire. Il peut toutefois avoir une autre géométrie et l'effet de plaquage par défaut du piston 50 contre son siège 47 est obtenu pour autant que l'aire de la section transversale du piston 50, prise au niveau de son contact étanche avec l'alésage 54 perpendiculairement à l'axe Y-Y', est inférieure à l'aire de la section transversale du piston 50 au niveau de sa zone d'appui sur le siège 47 en position fermée de la vanne 200.

Le piston 50 comprend dans la direction Y-Y' une tête 506 reliée à la partie 505 par une tige 507 de diamètre réduit. Le piston 50 est monté sur la plaque 152 en insérant la tête 506 dans un logement 156 formé sur le côté de la plaque 152 opposée au corps principal 40. Un jeu radial J₁ est ménagé entre la tige 507 et le bord d'un orifice 157 que traverse cette tige, au fond du logement 156. Ce jeu radial J₁ permet un ajustement de la position du piston 50 par rapport à la plaque 152, selon une direction perpendiculaire à l'axe Y-Y'.

Par ailleurs, la tête 506 est montée dans le logement 156 avec un jeu axial J₂, parallèle à l'axe Y-Y'. Ceci permet un ajustement de la position axiale, le long de l'axe Y-Y', du piston 50 par rapport à la plaque 152, notamment lorsque le piston vient en appui contre son siège 47.

Le piston 52 est cylindrique à section circulaire et l'alésage 56 a une section circulaire correspondante. Un joint torique 196 est installé dans une gorge 198 ménagée sur la surface radiale de l'alésage 56. La section d'étanchéité entre le piston 52 et l'alésage 56 au niveau du joint 196 est réalisée sur un disque de diamètre égal au diamètre D₅₂₀ du piston 52. Le diamètre D₅₂₀ est supérieur au diamètre D₅₀₅ de sorte que, en configuration ouverte de la vanne représentée à la figure 13, l'effort exercé par le fluide sur le piston 52, notamment au niveau de sa surface 522, dirigé dans le sens de la fermeture de la vanne et proportionnel au diamètre D₅₂₀, est supérieur à l'effort du fluide sur le piston 50, notamment au niveau de sa surface 502, dirigé dans le sens de l'ouverture et proportionnel au diamètre D₅₀₅ et la résultante des efforts de pression dûs à la présence du fluide dans l'espace 542 et dans la chambre 44 et qui s'appliquent sur l'équipage mobile tend à refermer la vanne.

Ce fonctionnement peut être obtenu pour autant que l'aire de la section transversale du piston 52 au niveau de son contact étanche avec l'alésage 56 est supérieure à l'aire de la section transversale du piston 50 au niveau de son contact étanche avec l'alésage 54.

La différence entre les diamètres D₅₀₅ et D₅₂₀ est de l'ordre de 4% et n'est donc pas visible sur les dessins.

Lorsque la vanne est ouverte, les colonnes 142 et 144 sont soumises, par les efforts exercés par la pression du fluide sur les pistons 50 et 52, à des contraintes de traction non préjudiciables car les colonnes 142 et 144 sont disposées à l'extérieur du conduit 400 de circulation et donc dimensionnables sans perturber le passage du fluide.

Le piston 52 comprend une tête 526 et une tige 527 de géométries analogues à celles des éléments 506 et 507. Un logement 158 et un orifice 159 comparables au logement 156 et à l'orifice 157 sont ménagés dans la plaque 154 et permettent de recevoir respectivement la tête 526 et la tige 527 avec un jeu radial J₃, ce qui permet un ajustement de la position du piston 52 par rapport à la plaque 154 perpendiculairement à l'axe Y-Y'. Les logements 156 et 158 accueillent les têtes 506 et 526 avec des jeux radiaux au moins égaux respectivement aux jeux J₁ et J₃, voire supérieurs. En variante, les jeux J₁ et J₃ à prendre en considération sont définis au niveau des têtes 506 et 526, les orifices 157 et 159 accueillant les tiges 507 et 527 avec un jeu radial au moins égal, voire supérieur.

Du fait de l'ouverture de la vanne 200, le fluide sous pression provenant du tuyau 46 s'écoule dans le canal 42, après avoir traversé les parties 48, 542 et 44 du conduit de circulation 400, avec une pression suffisante pour repousser le clapet anti-retour 13 dans le corps 11 de l'élément mâle, de sorte que celui-ci s'écarte du joint 14 et laisse passer le fluide dans le canal 12. Dans la configuration verrouillée des éléments mâle et femelle, avec la vanne 200 ouverte autorisant la circulation du fluide, cette pression s'exerce également sur le joint 20 qui est ainsi plaqué à la fois contre le fond 19a de la gorge 19, contre la surface externe du manchon 60 et contre l'extrémité avant du manchon externe 78. Dans cette position représentée à la figure 11, le joint 20 empêche le passage du fluide à la fois dans la zone d'interface entre le corps 11 et le manchon externe 78, c'est-à-dire l'espace annulaire 350 défini entre le corps 11 de l'élément mâle B et une partie du corps auxiliaire 70 de l'élément femelle A, ainsi que dans la zone d'interface entre les manchons interne 60 et externe 78, c'est-à-dire l'espace annulaire 300. Ce faisant, le joint 20 empêche l'écoulement de fluide sous pression à la fois vers l'extérieur des corps 11 et 70 et vers le conduit d'échappement 100. Cette fonction de double étanchéité du joint 20 permet une simplification de la construction et un gain économique.

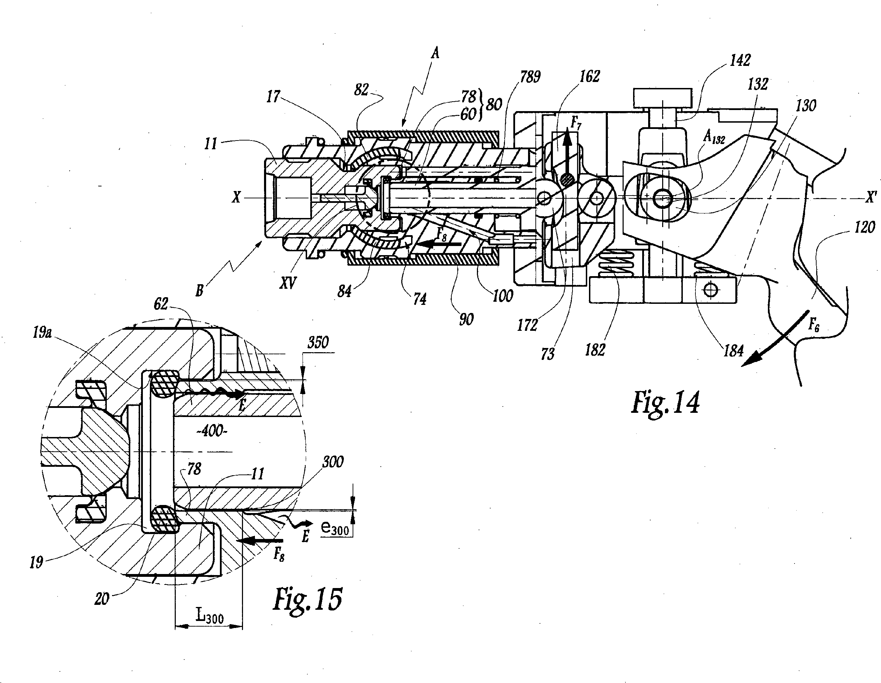

Lorsqu'il convient de refermer la vanne avant de désaccoupler les éléments mâle et femelle B et A, l'opérateur fait pivoter le levier 120 dans le sens de la flèche F₆ à la figure 14, c'est-à-dire dans un sens inverse de celui de la flèche F₁, ce qui a pour effet, par un mouvement inverse de celui explicité ci-dessus au sujet du levier 120, de ramener le piston 50 en appui contre son siège 47. La vanne est donc fermée, interrompant la circulation du fluide. Le clapet 13 n'étant plus repoussé dans le canal 12 par la pression du fluide circulant dans l'élément mâle B est ramené contre son siège par un ressort non représenté. La poursuite du mouvement selon la flèche F₆ du levier 120 a pour effet de déplacer les cames 162 et 122 dans le sens de la flèche F₇ à la figure 14. Ce déplacement des cames 162 qui sont toujours engagées entre les galets 172 et 174 autorise le déplacement du corps auxiliaire 70 par rapport au corps principal 40 vers l'avant de l'élément femelle A, c'est-à-dire vers la gauche de la figure 14, comme représenté par la flèche F₈ sur cette figure. Le mouvement vers l'avant du corps auxiliaire 70 a lieu grâce à l'action du ressort 789 s'exerçant sur le manchon externe 78 et grâce à la pression du fluide emprisonné qui s'exerce sur le corps 11 1 de l'élément mâle B, tendant à le faire reculer hors de l'élément femelle A et maintenant les organes de verrouillage 82 et 84 dans la gorge 17.

Comme il ressort de la figure 15, ce mouvement a pour effet de ramener le manchon externe 78 dans une configuration où son bord avant est sensiblement aligné, selon une direction perpendiculaire à l'axe X-X', avec le bord avant de l'extrémité 62. Dans cette configuration où le fluide sous pression emprisonné entre le piston 50 et le clapet 13 doit être purgé, le joint torique 20 est plaqué contre le fond 19a de la gorge 19 et contre l'extrémité avant du manchon 78 mais n'est plus en contact avec le manchon 60. La forme du manchon externe 78, notamment la valeur de l'angle β, est choisie pour ne pas marquer le joint 20 dans cette position.

L'espace annulaire 300 débouche directement dans la gorge 19 qui communique avec un volume formé par le raccordement du conduit de circulation de fluide 400 et du canal de circulation 12 en amont du clapet 13. L'espace 300 débouche dans la gorge 19 de manière axiale et au niveau des bords avant du manchon interne 60 et/ou du manchon externe 78.

Dans cette configuration où l'élément mâle B est verrouillé dans l'élément femelle A, la vanne 200 fermée et l'élément femelle purgé, le joint torique 20 empêche le passage du fluide dans la zone d'interface entre le manchon externe 78 et le corps 11 de l'élément mâle B, c'est-à-dire l'espace annulaire 350, de sorte que les éléments mâle B et femelle A restent en contact étanche et que du fluide ne s'échappe pas vers l'extérieur de l'ensemble formé des corps 11 et 70. En revanche, le joint torique 20 n'empêche plus le passage du fluide dans la zone d'interface 300 entre les manchons 60 et 78, de sorte que du fluide sous pression peut s'écouler dans l'espace annulaire 300 jusque dans le conduit d'échappement 100, comme représenté par les flèches d'écoulement E à la figure 15.

Ainsi, le fluide sous pression résiduel se trouvant emprisonné en aval du siège 47 dans la chambre 44 et dans le canal 42 après fermeture de la vanne 200 et du clapet 13 peut être évacué à travers le conduit d'échappement 100. Lorsque la valeur de la pression en aval du siège 47 devient inférieure à une certaine valeur, déterminée pour la sécurité de l'utilisateur, le ressort 92 parvient à repousser la bague de commande 90, les organes de verrouillage 82 et 84 se dégagent de la gorge 17 et l'élément mâle B peut être dégagé de l'élément femelle A.

Grâce au positionnement des manchons 60 et 78 et du joint torique 20, une fonction automatique du contrôle de l'écoulement du fluide sous pression vers le conduit d'échappement 100 est obtenue, laquelle ne requiert pas de manoeuvre particulière de la part d'un utilisateur puisqu'elle résulte, de façon automatique, des mouvements des parties constitutives du raccord lors des étapes successives d'accouplement, d'ouverture de la vanne 200, de fermeture de la vanne 200 et de désaccouplement.

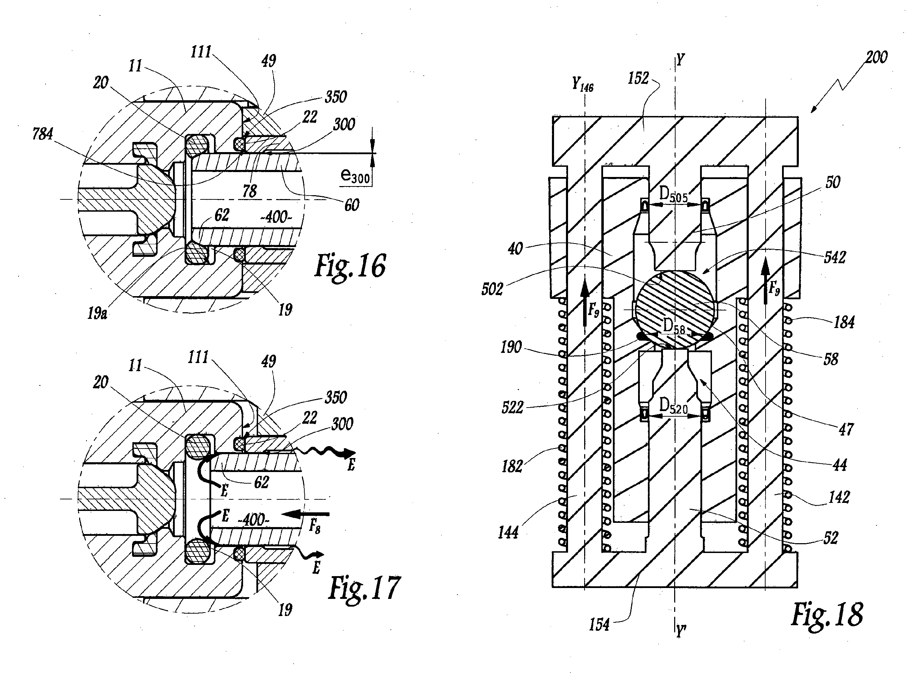

Dans le deuxième mode de réalisation de l'invention représenté aux figures 16 et 17, les éléments analogues à ceux du premier mode de réalisation portent les mêmes références.

Dans ce mode de réalisation, un joint torique 22 est intercalé entre la face frontale d'extrémité 784 du manchon 78 et le bord avant 111 du corps 11. Ce joint torique 22 assure l'étanchéité au niveau de l'interface 350 entre les corps 11 et 70. Le manchon interne 60 est en appui contre le joint torique 20 lorsque du fluide sous pression s'écoule à travers le raccord, comme représenté à la figure 16. Il plaque alors le joint 20 contre le fond 19a de la gorge 19.

Comme représenté à la figure 17, après fermeture de la vanne du raccord et lors du désaccouplement des éléments mâle et femelle du raccord, le manchon 78 est repoussé dans le sens de la flèche F₈, ce qui a pour effet de repousser de la même façon le corps 11, de telle sorte que l'extrémité 62 du manchon interne 60 est écartée du joint torique 20, ce qui laisse un passage disponible pour l'écoulement E de fluide sous pression résiduelle en direction du conduit d'échappement 100, à travers l'espace annulaire 300 défini entre la surface externe de l'extrémité 62 du manchon interne 60 et la surface externe du manchon externe 78.

Dans le troisième mode de réalisation de l'invention représenté à la figure 18, les éléments analogues à ceux du premier mode de réalisation portent les mêmes références. La vanne 200 de ce mode de réalisation comprend un premier piston 50 et un deuxième piston 52 entre lesquels est disposée selon la direction Y-Y' une bille 58 apte à venir en appui contre un siège 47 formé par le corps principal 40 de l'élément femelle du raccord et qui est équipé d'un joint torique 190. Les pistons 50 et 52 coopèrent avec la bille 58 au niveau de leurs surfaces d'extrémité respectives 502 et 522. Ces contacts peuvent être simultanés ou non simultanés. Un espace annulaire 542 est défini autour du piston 50 et de la bille 58, en amont du joint 47, alors qu'une chambre d'écoulement 44 est définie en aval de ce siège. La chambre 44 est une partie d'un conduit 400 d'écoulement de fluide sous pression dans le corps principal 40 de l'élément femelle de raccord A. En configuration fermée de la vanne, le piston 50 vient indirectement en appui contre le siège 47 par l'intermédiaire de la bille 58 que le piston 50 pousse contre ce siège, au moyen de sa surface d'extrémité 502.

Pour l'ouverture de la vanne, le piston 52 pousse, par sa surface d'extrémité 522, la bille 58 de façon à la décoller du siège 47.

Selon un aspect optionnel de l'invention qui n'est pas représenté, un dispositif élastique peut être intercalé entre la surface 502 du piston 50 et la bille 58 pour maintenir un contact entre le piston 50 et la bille 58, malgré le jeu axial entre le piston 50 et la plaque 152. Comme dans le premier mode de réalisation, les pistons 50 et 52 sont reliés par des moyens de liaison mécanique constitués par deux colonnes 142 et 144 et deux plaques 152 et 154 qui sont disposées à l'extérieur du conduit d'écoulement du fluide sous pression 400.

En configuration fermée représentée à la figure 18, la bille 58 repose sur le siège 47. Le fluide présent dans l'espace annulaire 542 ne sollicite le piston 50 et la bille 58 qu'en compression.

Deux ressorts 182 et 184 exercent sur l'équipage formé des pièces 50, 52, 142, 144, 152 et 154 un effort qui tend à refermer par défaut la vanne.

Lorsqu'il convient d'ouvrir cette vanne 200, on agit sur les colonnes 142 et 144 pour exercer sur celles-ci un effort F₉ parallèle à l'axe Y-Y' de déplacement des pistons, dans un sens d'éloignement du piston 50 par rapport au siège 47. Cet effort peut être exercé par des galets tels que les galets 130 et 134 mentionnés pour le premier mode de réalisation ou par tout autre moyen adapté et non représenté.

Dans ce mode de réalisation également, les sections d'étanchéité peuvent être légèrement différentes, comme mentionné pour le premier mode de réalisation, pour sécuriser la fermeture et faciliter l'ouverture. Le diamètre D₅₈ au niveau du contact de la bille 58 avec le siège 47 qui correspond à la section d'étanchéité entre la bille 58 et le siège 47 au niveau du joint 190 est légèrement supérieur au diamètre D₅₀₅ pour limiter l'effort d'ouverture exercé par le piston 52 sur la bille 58.

Les caractéristiques techniques des modes de réalisation décrits ci-dessus peuvent être combinées entre elles dans le cadre de la présente invention.

## Revendications

1. Elément femelle de raccord rapide destiné à la jonction amovible de canalisations (C₁, C₂) de fluide sous pression, cet élément femelle (A) étant équipé d'un conduit de circulation (400) de fluide et d'une vanne (200) de contrôle de l'écoulement du fluide dans le conduit, la vanne comprenant un premier piston (50) et un deuxième piston (52) mobiles selon une même direction (Y-Y') par rapport à un corps (40) de l'élément femelle, le premier piston étant apte à coopérer directement ou indirectement avec un siège (47) formé par le corps de l'élément femelle, pour la fermeture de la vanne (200), alors que les premier et deuxième pistons sont reliés par des moyens de liaison mécanique (142, 144, 152, 154) et définissent chacun l'une de deux surfaces (502, 522) opposées en contact avec le fluide lorsque la vanne (200) est ouverte, **caractérisé en ce que** les moyens (142, 144, 152, 154) de liaison mécanique entre les premier et deuxième pistons (50, 52) sont disposés à l'extérieur du conduit de circulation de fluide (400).

2. Elément femelle de raccord rapide selon la revendication 1, **caractérisé en ce que** les moyens (142, 144, 152, 154) de liaison mécanique entre les premier (50) et deuxième (52) pistons comprennent une première plaque (152) cinématiquement liée au premier piston, une deuxième plaque (154) cinématiquement liée au deuxième piston, et au moins un organe (142, 144) de liaison reliant les première et deuxième plaques, **en ce que** les première et deuxième plaques sont disposées de part et d'autre d'une portion (44) du conduit de circulation (400) définie entre les surfaces opposées (502, 522) des pistons et **en ce que** l'organe (142, 144) de liaison est monté mobile par rapport au corps (40) de l'élément femelle, selon une direction (Y₁₄₅, Y₁₄₆) parallèle à la direction de déplacement (Y-Y') des pistons par rapport à ce corps.

3. Elément femelle de raccord rapide selon la revendication 2, **caractérisé en ce qu'**il comprend deux organes (142, 144) de liaison entre les première (152) et deuxième (154) plaques, ces deux organes de liaison étant montés coulissants selon la direction (Y-Y') de déplacement des deux pistons dans deux logements (145, 146) ménagés dans le corps (40) de l'élément femelle.

4. Elément femelle de raccord rapide selon l'une des revendications 2 ou 3, **caractérisé en ce que** l'un au moins des pistons (50, 52) est partiellement inséré dans un logement (156, 158) correspondant de la plaque (152, 154) à laquelle il est cinématiquement lié et **en ce qu'**un jeu radial (J₁, J₃) est ménagé entre le piston et ce logement.

5. Elément femelle de raccord rapide selon l'une des revendications 2 à 4, **caractérisé en ce que** le premier piston (50) est partiellement inséré dans un logement (156) correspondant de la première plaque (152) et **en ce qu'**un jeu axial (J₂) est ménagé entre le piston et ce logement.

6. Elément femelle de raccord rapide selon l'une des revendications précédentes, **caractérisé en ce que** le premier piston (50) est monté, coulissant et de façon étanche, dans un premier alésage (54) du corps (40), et **en ce que** le deuxième piston (52) est monté, coulissant et de façon étanche, dans un deuxième alésage (56) du corps (40).

7. Elément femelle de raccord rapide selon la revendication 6, **caractérisé en ce que** l'aire de la section transversale (D₅₂₀) du deuxième piston (52) au niveau de son contact étanche avec le deuxième alésage (56) est supérieure à l'aire de la section transversale (D₅₀₅) du premier piston (50) au niveau de son contact étanche avec le premier alésage (54).

8. Elément femelle de raccord rapide selon l'une des revendications précédentes, **caractérisé en ce que** le premier piston (50) est monté, coulissant et de façon étanche, dans un alésage (54) du corps (40) et **en ce que** la section transversale (D₅₀₄) du premier piston au niveau de sa zone d'appui sur le siège (47) ou la section transversale (D₅₈) d'un organe plaqué par le premier piston (50) sur le siège (47) a une aire supérieure à l'aire de la section transversale (D₅₀₅) du premier piston (50) au niveau de son contact étanche avec l'alésage (54).

9. Elément femelle de raccord rapide selon l'une des revendications précédentes, **caractérisé en ce qu'**il comprend au moins un levier (120) articulé par rapport au corps (40) autour d'un axe (A₁₂₄) perpendiculaire à la direction de déplacement (Y-Y') des pistons, **en ce que** le levier est cinématiquement lié aux moyens de liaison mécanique (142, 144, 152, 154), **en ce qu'**une première rotation (F₁) du levier par rapport à l'axe (A₁₂₄) provoque une translation (F₉) des moyens de liaison mécanique et des pistons (50, 52) selon leur direction de coulissement (Y-Y') dans un premier sens et **en ce qu'**une deuxième rotation (F₆) du levier par rapport à l'axe (A₁₂₄), opposée à la première rotation, provoque une translation des moyens de liaison mécanique et des pistons selon leur direction de déplacement (Y-Y') dans l'autre sens.

10. Elément femelle de raccord rapide selon l'une des revendications précédentes, **caractérisé en ce que** l'extrémité du premier piston (50) présente une surface (504) partiellement sphérique apte à venir en appui sur le siège (47) en configuration fermée de la vanne (200).

11. Elément femelle de raccord rapide selon l'une des revendications 1 à 9, **caractérisé en ce que** le premier piston (50) coopère avec le siège (47) par l'intermédiaire d'une bille (48) apte à venir en appui sur le siège, et **en ce que** le premier piston (50) et le deuxième piston (52) sont aptes à venir en contact avec la bille (58) au niveau de leurs deux surfaces opposées (502, 522).

12. Raccord rapide pour la jonction amovible de canalisations (C₁, C₂) de fluide sous pression, ce raccord comprenant deux éléments, respectivement mâle (B) et femelle (A), aptes à s'emmancher l'un dans l'autre, **caractérisé en ce que** l'élément femelle (A) est selon l'une des revendications précédentes.

## Patentansprüche

1. Aufnahmeelement einer Schnellkupplung, die für die lösbare Verbindung von unter Druck stehenden Leitungen (C₁, C₂) für ein Fluid bestimmt ist, wobei dieses Aufnahmeelement (A) mit einem Kanal (400) für die Zirkulation des Fluids und einem Ventil (200) zur Steuerung der Strömung des Fluids in dem Kanal ausgerüstet ist, wobei das Ventil einen ersten Kolben (50) und einen zweiten Kolben (52) aufweist, die gemäß einer gleichen Richtung (Y-Y') in Bezug auf einen Körper (40) des Aufnahmeelementes beweglich sind, wobei der erste Kolben ausgebildet ist, direkt oder indirekt mit einem von dem Körper des Aufnahmeelementes gebildeten Sitz (47) für das Schließen des Ventils (200) zusammenzuarbeiten, während der erste und der zweite Kolben durch mechanische Verbindungsmittel (142, 144, 152, 154) verbunden sind und jeder eine von zwei gegenüberliegenden Flächen (502, 522) in Kontakt mit dem Fluid bestimmt, wenn das Ventil (200) offen ist, **dadurch gekennzeichnet, dass** die mechanischen Verbindungsmittel (142, 144, 152, 154) zwischen dem ersten und dem zweiten Kolben (50, 52) außerhalb des Kanals (400) zur Zirkulation des Fluids angeordnet sind.

2. Aufnahmeelement einer Schnellkupplung nach Anspruch 1, **dadurch gekennzeichnet, dass** die mechanischen Verbindungsmittel (142, 144, 152, 154) zwischen dem ersten (50) und dem zweiten (52) Kolben eine erste Platte (152), die kinematisch mit dem ersten Kolben verbunden ist, eine zweite Platte (154), die kinematisch mit dem zweiten Kolben verbunden ist, und mindestens ein Verbindungselement (142, 144), das die erste und die zweite Platte verbindet, umfassen, dass die erste und die zweite Platte beidseitig eines Bereichs (44) des Kanals zur Zirkulation (400) angeordnet sind, der zwischen den zwei gegenüberliegenden Flächen (502, 522) der Kolben begrenzt ist, und dass das Verbindungselement (142, 144) beweglich in Bezug auf den Körper (40) des Aufnahmeelementes gemäß einer Richtung (Y₁₄₅, Y₁₄₆) parallel zur Richtung der Verschiebung (Y-Y') der Kolben in Bezug auf diesen Körper montiert ist.

3. Aufnahmeelement einer Schnellkupplung nach Anspruch 2, **dadurch gekennzeichnet, dass** es zwei Verbindungselemente (142, 144) zwischen der ersten (152) und der zweiten (154) Platte umfasst, wobei diese Verbindungselemente gleitend gemäß der Richtung (Y-Y') der Verschiebung der zwei Kolben in zwei Aufnahmeräumen (145, 146) beweglich sind, die in dem Körper (40) des Aufnahmeelements eingearbeitet sind.

4. Aufnahmeelement einer Schnellkupplung nach einem der Ansprüche 2 oder 3, **dadurch gekennzeichnet, dass** mindestens einer der Kolben (50, 52) teilweise in einen korrespondierenden Aufnahmeraum (156, 158) der Platte (152, 154), mit der er kinematisch verbunden ist, eingreift und dass ein radiales Spiel (J₁, J₃) zwischen dem Kolben und diesem Aufnahmeraum vorgesehen ist.

5. Aufnahmeelement einer Schnellkupplung nach einem der Ansprüche 2 bis 4, **dadurch gekennzeichnet, dass** der erste Kolben (50) teilweise in einen korrespondierenden Aufnahmeraum (156) der ersten Platte (152) eingreift und dass ein axiales Spiel (J₂) zwischen dem Kolben und diesem Aufnahmeraum vorgesehen ist.

6. Aufnahmeelement einer Schnellkupplung nach einem der vorhergehenden Ansprüche, **dadurch gekennzeichnet, dass** der erste Kolben (50) gleitend und in abgedichteter Weise in einer ersten Bohrung (54) des Körpers (40) montiert ist und dass der zweite Kolben (52) gleitend und in abgedichteter Weise in einer zweiten Bohrung (56) des Körpers (40) montiert ist.

7. Aufnahmeelement einer Schnellkupplung nach Anspruch 6, **dadurch gekennzeichnet, dass** der Flächeninhalt des Querschnitts (D₅₂₀) des zweiten Kolbens (52) an der Stelle seines abgedichteten Kontaktes mit der zweiten Bohrung (56) größer ist als der Flächeninhalt des Querschnitts (D₅₀₅) des ersten Kolbens (50) an der Stelle seines abgedichteten Kontaktes mit der zweiten Bohrung (54).

8. Aufnahmeelement einer Schnellkupplung nach einem der vorhergehenden Ansprüche, **dadurch gekennzeichnet, dass** der erste Kolben (50) gleitend und in abgedichteter Weise in einer Bohrung (54) des Körpers (40) montiert ist und dass der Querschnitt (D₅₀₄) des ersten Kolbens an seiner Abstützzone an dem Sitz (47) oder der Querschnitt (D₅₈) eines Elements, das von dem ersten Kolben (50) auf den Sitz (47) gepresst wird, einen Flächeninhalt größer als der Flächeninhalt des Querschnitts (D₅₀₅) des ersten Kolbens (50) an der Stelle seines abgedichteten Kontaktes mit der Bohrung (54) aufweist.

9. Aufnahmeelement einer Schnellkupplung nach einem der vorhergehenden Ansprüche, **dadurch gekennzeichnet, dass** es mindestens einen Hebel (120) umfasst, der in Bezug auf den Körper (40) um eine Achse (A₁₂₄) senkrecht zur Richtung der Verschiebung (Y-Y') der Kolben angelenkt ist, dass der Hebel kinematisch mit den mechanischen Verbindungsmitteln (142, 144, 152, 154) verbunden ist, dass eine erste Rotation (F₁) des Hebels in Bezug auf die Achse (A₁₂₄) eine Translation (F₉) der mechanischen Verbindungsmittel und der Kolben (50, 52) gemäß ihrer Gleitrichtung (Y-Y') in einem ersten Richtungssinn hervorruft und dass eine zweite Rotation (F₆) des Hebels in Bezug auf die Achse (A₁₂₄), entgegengesetzt zur ersten Rotation, eine Translation der mechanischen Verbindungsmittel und der Kolben gemäß ihrer Richtung der Verschiebung (Y-Y') in den anderen Richtungssinn hervorruft.

10. Aufnahmeelement einer Schnellkupplung nach einem der vorhergehenden Ansprüche, **dadurch gekennzeichnet, dass** das Ende des ersten Kolbens (50) eine teilweise sphärische Fläche (504) aufweist, die ausgebildet ist, in der geschlossenen Stellung des Ventils (200) in Abstützung auf den Sitz (47) zu kommen.

11. Aufnahmeelement einer Schnellkupplung nach einem der Ansprüche 1 bis 9, **dadurch gekennzeichnet, dass** der erste Kolben (50) mit dem Sitz (47) über eine Kugel (48) zusammenarbeitet, die ausgebildet ist, in Abstützung auf dem Sitz zu kommen, und dass der erste Kolben (50) und der zweite Kolben (52) ausgebildet sind, an ihren beiden gegenüberliegenden Flächen (502, 522) in Kontakt mit der Kugel (48) zu kommen.

12. Schnellkupplung für die lösbare Verbindung von unter Druck stehenden Leitungen (C₁, C₂) für ein Fluid, wobei diese Kupplung zwei Elemente, ein Einsteckelement (B) und ein Aufnahmeelement (A) umfasst, die ausgebildet sind, ineinandergesteckt zu werden, **dadurch gekennzeichnet, dass** das Aufnahmeelement (A) nach einem der vorhergehenden Ansprüche ausgebildet ist.

## Claims

1. A female quick-connect coupling element for releasably joining together pipes (C₁, C₂) for pressurized fluid, said female element (A) being equipped with a fluid flow duct (400) and with a valve (200) for controlling the flow of the fluid through the duct, the valve having a first piston (50) and a second piston (52) that are mounted to move along the same axis (Y-Y') relative to a body (40) of the female element, the first piston being suitable for co-operating directly or indirectly with a seat (47) formed by the body of the female element, so as to close the valve (200), while the first and second pistons are interconnected via mechanical link means (142, 144, 152, 154), and each of said pistons defines one of two opposite surfaces (502, 522) in contact with the fluid when the valve (200) is open, **characterized in that** the mechanical link means (142, 144, 152, 154) between the first and second pistons (50, 52) are disposed outside the fluid flow duct (400).

2. A female quick-connect coupling element according to claim 1, **characterized in that** the mechanical link means (142, 144, 152, 154) between the first piston (50) and the second piston (52) comprise a first plate (152) drivingly linked to the first piston, a second plate (154) drivingly linked to the second piston, and at least one link member (142, 144) interconnecting the first and second plates, **in that** the first and second plates are disposed on either side of a portion (44) of the flow duct (400) that is defined between opposite surfaces (502, 522) of the pistons, and **in that** the link member (142, 144) is mounted to move relative to the body (40) of the female element, along a direction (Y₁₄₅, T₁₄₆) parallel to the direction (Y-Y') along which the pistons move relative to said body.

3. A female quick-connect coupling according to claim 2, **characterized in that** it has two link members (142, 144) between the first plate (152) and the second plate (154), which link members are mounted to slide along the direction (Y-Y') along which the two pistons move in two recesses (145, 146) provided in the body (40) of the female element.

4. A female quick-connect coupling element according to claim 2 or claim 3, **characterized in that** at least one of the pistons (50, 52) is partially inserted into a corresponding recess (156, 158) in the plate (152, 154) to which it is drivingly linked, and **in that** radial clearance (J₁, J₃) is provided between this piston and this recess.

5. A female quick-connect coupling element according to any one of claims 2 to 4, **characterized in that** the first piston (50) is partially inserted into a corresponding recess (156) in the first plate (152), and **in that** radial clearance (J₂) is provided between this piston and this recess.

6. A female quick-connect coupling element according to any preceding claims, **characterized in that** the first piston (50) is mounted to slide in leaktight manner in a first bore (54) in the body (40), and **in that** the second piston (52) is mounted to slide in leaktight manner in a second bore (56) in the body (40).

7. A female quick-connect coupling element according to claim 6, **characterized in that** the area of the cross-section (D₅₂₀) of the second piston (52) where it is in leaktight contact with the second bore (56) is greater than the area of the cross-section (D₅₀₅) of the first piston (50) where it is in leaktight contact with the first bore (54).

8. A female quick-connect coupling element according to any preceding claims, **characterized in that** the first piston (50) is mounted to slide in leaktight manner in a bore (54) in the body (40), and **in that** the cross-section (D₅₀₄) of the first piston at its zone where it bears against the seat (47) or the cross-section (D₅₈) of a member pressed by the first piston (50) against the seat (47) has an area greater than the area of the cross-section (D₅₀₅) of the first piston (50) where it is in leaktight contact with the bore (54).

9. A female quick-connect coupling element according to any preceding claims, **characterized in that** it is provided with at least one lever (120) that is hinged relative to the body (40) about an axis (A₁₂₄) perpendicular to the direction (Y-Y') along which the pistons move, **in that** the lever is drivingly linked to the mechanical link means (142, 144, 152, 154), **in that** a first movement in rotation (F₁) of the lever about the axis (A₁₂₄) causes the mechanical link means and the pistons (50, 52) to move in translation (F₉) with a first orientation along the direction (Y-Y') along which they slide, and **in that** a second movement in rotation (F₆) of the lever about the axis (A₁₂₄), opposite to the first movement in rotation, causes the link means and the pistons to move in translation with the other orientation along the direction (Y-Y') along which they move.

10. A female quick-connect coupling element according to any preceding claims, **characterized in that** the end of the first piston (50) has a surface (504) that is partially spherical and that is suitable for coming to bear against the seat (47) when the valve (200) is in the closed configuration.

11. A female quick-connect coupling element according to any preceding claims, **characterized in that** the first piston (50) co-operates with the seat (47) via a ball (48) suitable for coming to bear against the seat, and **in that** the first piston (50) and the second piston (52) are suitable for coming into contact with the ball (58) at their two opposite surfaces (502, 522).

12. A quick-connect coupling for releasably joining together pipes (C₁, C₂) for pressurized fluid, said coupling comprising two elements, namely a male element (B) and a female element (A), which elements are suitable for fitting one into the other, said coupling being **characterized in that** the female element (A) is according to any preceding claim.
